# EUROPEAN PATENT SPECIFICATION

(11) **EP 3 051 088 B1**
(45) Date of publication and mention of the grant of the patent: **26.07.2017**
(21) Application number: 16152196.8
(22) Date of filing: 21.01.2016
(51) Int. Cl.: F01N 3/20

(54) **ADDITIVE SUPPLY DEVICE**
ADDITIVZUGABEVORRICHTUNG
DISPOSITIF D'ALIMENTATION EN ADDITIF

(30) Priority: 02.02.2015 JP 2015018446
(43) Date of publication of application: 03.08.2016
(73) Proprietor: TOYOTA JIDOSHA KABUSHIKI KAISHA, Toyota-shi, Aichi-ken, 471-8571 (JP)
(72) Inventor: OTA, Hirohiko, Aichi-ken, 471-8571 (JP)
(74) Representative: Kuhnen & Wacker

(56) References cited:
- EP-A1- 2 166 208
- EP-A2- 2 682 579
- EP-A2- 2 682 580
- JP-A- 2013 096 258

## Description

### BACKGROUND OF THE INVENTION

### 1. Field of the Invention

The invention relates to an additive supply device.

### 2. Description of Related Art

Japanese Patent Application JP 2008-138583 A discloses an additive supply device that is provided with an adding valve which injects an additive into an exhaust passage of an internal combustion engine mounted in a vehicle, the adding valve being opened in accordance with a freezing change of the additive after the internal combustion engine is stopped. According to this device, the additive is released through the opening of the adding valve even in the event of an increase in additive volume in the adding valve during a freezing process after the stopping of the internal combustion engine. Accordingly, a failure of the adding valve due to the additive volume increase attributable to the freezing is suppressed. An exhaust emission control system that is applied to an internal combustion engine in which an automatic stop and automatic restart of engine operation are carried out is disclosed by EP 2 682 580 A2. This exhaust emission control system includes an urea aqueous solution addition valve that supplies urea aqueous solution to an exhaust passage and an urea aqueous solution supply tube that supplies urea aqueous solution to the urea aqueous solution addition valve, and recovers urea aqueous solution in the urea aqueous solution supply tube at the time of a manual stop of engine operation as a result of off operation of an ignition switch. At the time of the automatic stop, an urea aqueous solution in an amount that is smaller than a recovery amount of urea aqueous solution at the time of the manual stop is recovered from the urea aqueous solution supply tube. Another exhaust emission control system for an internal combustion engine is known from JP 2013-096258 A.

### SUMMARY OF THE INVENTION

In a case where a temperature of exhaust gas increases during an operation of the internal combustion engine, values of temperatures of the adding valve exposed to the exhaust gas and a place around the adding valve are increased by residual heat even after the operation is stopped based on a stop command for the engine. This might lead to a failure attributable to overheating of the adding valve after the internal combustion engine is commanded to stop. In a case where traveling of the vehicle is stopped in the event of the stop command for the internal combustion engine, cooling of the adding valve by traveling wind becomes difficult, which is another factor causing the overheating of the adding valve.

The invention provides an additive supply device that is capable of suppressing overheating of an adding valve after an internal combustion engine is commanded to stop.

An additive supply device according to an aspect of the invention as set forth in claim 1 includes an adding valve and an electronic control unit. The adding valve is configured to inject an additive into an exhaust passage of an internal combustion engine. The electronic control unit is configured to control the injection of the additive from the adding valve. The electronic control unit is configured to execute a cooling injection control for injecting the additive from the adding valve after the internal combustion engine is commanded to stop such that a quantity of the injection of the additive during the cooling injection control is larger when a temperature of exhaust gas in the exhaust passage in an event of the stop command for the internal combustion engine is higher than a predetermined temperature than when the temperature is lower than the predetermined temperature. When the temperature of the exhaust gas increases during an engine operation preceding the stop command for the internal combustion engine, values of temperatures of the adding valve exposed to the exhaust gas and a place around the adding valve are increased by residual heat even after the stop command for the engine is made. This might lead to overheating of the adding valve after the internal combustion engine is commanded to stop. With the additive supply device according to the aspect described above, the adding valve and the place around the adding valve are cooled by the additive injected from the adding valve through the cooling injection control and the overheating of the adding valve can be suppressed even in a situation in which the temperature of the exhaust gas in the exhaust passage is high when the stop command for the internal combustion engine is made and the temperature of the adding valve is likely to be high after the stop command for the internal combustion engine is made. The electronic control unit according to this aspect is further configured to execute the cooling injection control when the stop command for the internal combustion engine is made and a traveling speed of a vehicle in which the internal combustion engine is mounted is lower than a threshold exceeding "0". In a state where the vehicle has a low traveling speed below the threshold, the cooling of the adding valve by the traveling wind becomes difficult and the adding valve is likely to be overheated. According to this aspect, however, the overheating of the adding valve in this situation can be suppressed.

In the additive supply device according to the aspect described above, the electronic control unit may be configured to execute the cooling injection control such that the quantity of the injection of the additive during the cooling injection control increases as the temperature of the exhaust gas in the exhaust passage in the event of the stop command for the internal combustion engine increases. According to this aspect, the quantity of the additive injection from the adding valve during the cooling injection control increases as the temperature of the exhaust gas in the exhaust passage in the event of the stop command for the internal combustion engine increases, that is, as the temperature of the adding valve is likely to increase after the stop command for the engine is made. Accordingly, the adding valve and the place around the adding valve can be cooled, without excess or deficiency, by the additive after the stop command for the internal combustion engine is made.

In the additive supply device according to the aspect described above, the electronic control unit may be configured to execute the cooling injection control such that the quantity of the injection of the additive during the cooling injection control is larger when an outside air temperature is high than when the outside air temperature is low. According to this aspect, the adding valve and the place around the adding valve can be effectively cooled by the additive and the overheating of the adding valve can be suppressed even in a situation in which the outside air temperature is high and a cooling effect for the adding valve and the place around the adding valve resulting from the additive injected from the adding valve during the cooling injection control is unlikely to be obtained.

In the additive supply device according to the aspect described above, the electronic control unit may be configured to execute the cooling injection control such that the quantity of the injection of the additive during the cooling injection control increases as the outside air temperature increases. According to this aspect, the quantity of the additive injection from the adding valve during the cooling addition control increases as the outside air temperature increases, and thus the adding valve and the place around the adding valve can be cooled, without excess or deficiency and in accordance with the outside air temperature, by the additive after the stop command for the internal combustion engine is made.

In the additive supply device according to the aspect described above, the electronic control unit may include an engine control portion and an addition control portion. The engine control portion may be configured to transmit a making of the stop command to the addition control portion in a case where the internal combustion engine is commanded to stop.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic drawing illustrating an entire internal combustion engine to which an additive supply device is applied;
FIG. 2 is a time chart illustrating how an adding valve is opened or closed when urea water addition is performed by a cooling injection control;
FIG. 3 is a graph illustrating how a required injection quantity changes with respect to changes in a temperature at stop initiation and an outside air temperature;
FIG. 4 is a graph illustrating how an injection period changes with respect to the changes in the temperature at stop initiation and the outside air temperature; and
FIG 5 is a flowchart illustrating a procedure of urea water injection from the adding valve regarding the cooling injection control.

### DETAILED DESCRIPTION OF EMBODIMENTS

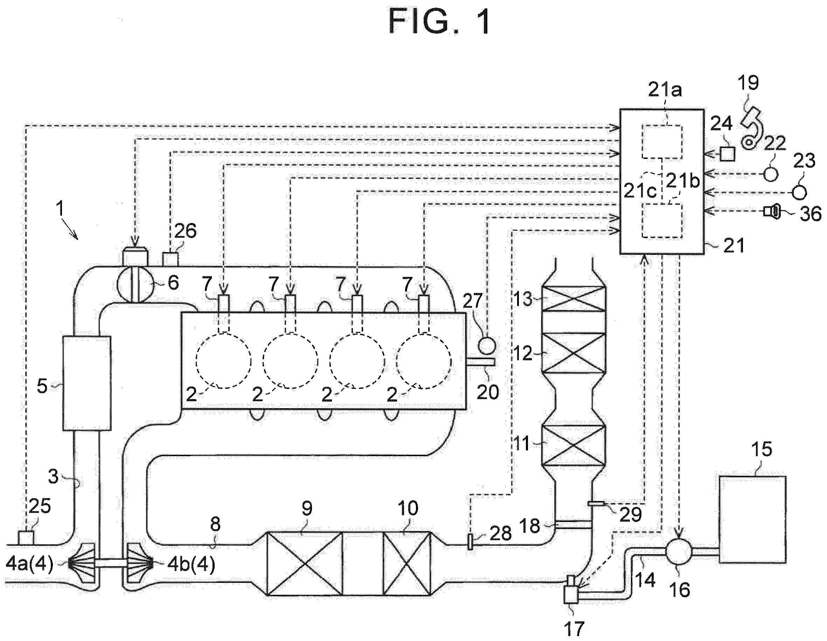

Hereinafter, an embodiment of an additive supply device will be described with reference to FIGS. 1 to 5. As illustrated in FIG 1, an intake passage 3 is connected to combustion chambers 2 of an internal combustion engine 1 that is mounted in a vehicle. In this intake passage 3, a compressor wheel 4a of a turbocharger 4, an intercooler 5, and an intake throttle valve 6 are disposed in order from its upstream side. Air passing through the intake passage 3 is suctioned into the combustion chambers 2 of the internal combustion engine 1 and a fuel from fuel injection valves 7 is injection-supplied into the combustion chambers 2 of the internal combustion engine 1. The internal combustion engine 1 is driven when this fuel is burned in the combustion chambers 2. Exhaust gas resulting from the combustion of the fuel in the combustion chambers 2 is sent to an exhaust passage 8 that is connected to the combustion chambers 2. In the exhaust passage 8, a turbine wheel 4b of the turbocharger 4, a first oxidation catalyst 9, a filter 10, a first NOx purification catalyst 11, a second NOx purification catalyst 12, and a second oxidation catalyst 13 are disposed in order from its upstream side.

The first oxidation catalyst 9 removes carbon monoxide (CO) and hydrocarbon (HC) by oxidation. The filter 10 collects particulate matter (PM) in the exhaust gas. The first NOx purification catalyst 11 and the second NOx purification catalyst 12 are selective reduction catalysts that purify the exhaust gas of NOx by reduction with a reducing agent. Specifically, the reducing agent such as urea water is added to the exhaust gas on the upstream side of the first NOx purification catalyst 11 in the exhaust passage 8, and then the urea water is hydrolyzed in response to heat of the exhaust gas and ammonia (NH3) is generated. This generated ammonia is adsorbed onto the first NOx purification catalyst 11 and the second NOx purification catalyst 12, and NOx reduction in these catalysts is performed. This reduction causes the NOx in the exhaust gas to be removed. The second oxidation catalyst 13 performs an oxidation treatment on the ammonia flowing out to a downstream side from the second NOx purification catalyst 12.

The additive supply device for injecting the reducing agent (urea water) as an additive into the exhaust passage 8 is disposed in the internal combustion engine 1. This additive supply device is provided with an adding valve 17 for injecting the urea water to the upstream side of the first NOx purification catalyst 11 and the downstream side of the filter 10 in the exhaust passage 8. The urea water that is added from the adding valve 17 to the exhaust gas in the exhaust passage 8 is dispersed in the form of finer mist by a dispersion plate 18 which is disposed on the downstream side of the adding valve 17 and the upstream side of the first NOx purification catalyst 11. The additive supply device is provided with a pump 16 and a tank 15, too. The pump 16 is connected to the adding valve 17 via a pipe 14. The tank 15 is connected to the pump 16 and stores the urea water. The additive supply device pumps up the urea water in the tank 15 and supplies the urea water to the pipe 14 and the adding valve 17 based on a positive rotation of the pump 16 and recovers the urea water in the adding valve 17 and the pipe 14 to the tank 15 based on a reverse rotation of the pump 16.

An electronic control unit 21 is disposed in the vehicle in which the internal combustion engine 1 is mounted. The electronic control unit 21 is provided with an engine control portion 21 a and an addition control portion 21 b. The engine control portion 21 a functions as a control device that performs various types of controls on the internal combustion engine 1. The addition control portion 21b controls the urea water injection from the adding valve 17. The engine control portion 21a and the addition control portion 21b are connected to each other by a communication cable 21c of an in-vehicle network (CAN) and share necessary information with each other by intercommunication via the communication cable 21c (CAN).

The following sensors are connected to an input port of the electronic control unit 21.
·A vehicle speed sensor 22 that detects a traveling speed (vehicle speed) of the vehicle.
·An outside air temperature sensor 23 that detects a temperature of an atmosphere outside the vehicle (outside air temperature).
·An ignition switch 36 that is operated when a driver manually begins to start the internal combustion engine 1 or stops an operation of the internal combustion engine 1.
·An accelerator position sensor 24 that detects an operation amount of an accelerator pedal 19 (accelerator operation amount) that is operated by the driver of the vehicle.
·An air flow meter 25 that detects the amount of air passing through the intake passage 3.
·An intake pressure sensor 26 that detects a pressure of the intake passage 3 on the downstream side of the intake throttle valve 6 (intake pressure).
·A crank position sensor 27 for detecting a rotation speed of a crankshaft 20 of the internal combustion engine 1.
·An exhaust gas temperature sensor 28 that detects a temperature of the exhaust gas on the downstream side of the filter 10 in the exhaust passage 8.
·A NOx sensor 29 that detects the amount of NOx in the exhaust gas on the upstream side of the first NOx purification catalyst 11 in the exhaust passage 8. A driving circuit for the fuel injection valves 7, a driving circuit for the intake throttle valve 6, a driving circuit for the pump 16, a driving circuit for the adding valve 17, and the like are connected to an output port of the electronic control unit 21.

The engine control portion 21a of the electronic control unit 21 discerns operation states of the internal combustion engine 1 based on detection signals input from the sensors and outputs command signals to the driving circuits connected to the output port, such as those for the fuel injection valves 7 and the intake throttle valve 6, in accordance with the discerned engine operation states. Then, a fuel injection control regarding the internal combustion engine 1, an opening degree control regarding the intake throttle valve 6, and the like are conducted through the electronic control unit 21 (engine control portion 21 a).

The addition control portion 21b of the electronic control unit 21 outputs command signals to the driving circuits, such as those for the pump 16 and the adding valve 17, in accordance with the discerned engine operation states. Then, a driving control regarding the pump 16, a driving control regarding the adding valve 17, and the like are conducted through the electronic control unit 21 (addition control portion 21b). During the driving control regarding the pump 16, the pump 16 performs the positive rotation while the internal combustion engine 1 is in operation so that the supply of the urea water to the adding valve 17 is performed and the pump 16 performs the reverse rotation for a predetermined period of time after the internal combustion engine 1 is stopped so that the urea water in the adding valve 17 and the pipe 14 is recovered.

A cooling injection control that is executed after the internal combustion engine 1 is commanded to stop will be described below. The stop command for the internal combustion engine 1 is made by the engine control portion 21 a of the electronic control unit 21 when, for example, the ignition switch 36 is OFF-operated by the driver of the vehicle. The stop command for the internal combustion engine 1 that is made by the engine control portion 21 a as described above is transmitted to the addition control portion 21b via the communication cable 21c of the in-vehicle network (CAN). In this case, the communication cable 21c functions as command transmitting means (command transmitting unit) for transmitting the making of the stop command for the internal combustion engine 1 by the engine control portion 21a to the addition control portion 21 b.

In the case of an engine operation raising the temperature of the exhaust gas before the operation of the internal combustion engine 1 is stopped, values of temperatures of the adding valve 17 exposed to the exhaust gas and a place around the adding valve 17 are increased by residual heat even after the stopping of the engine 1 subsequent to the stop command for the engine 1. This might lead to overheating of the adding valve 17 after the engine 1 is commanded to stop. In a case where traveling of the vehicle is stopped in the event of the stop command for the internal combustion engine 1, cooling of the adding valve 17 by traveling wind becomes difficult, which is another factor causing the overheating of the adding valve 17.

In order to suppress the overheating of the adding valve 17, the addition control portion 21b of the electronic control unit 21 executes the cooling injection control for the urea water injection from the adding valve 17 after the transmission of the making of the stop command for the internal combustion engine 1 and before the recovery of the urea water in the adding valve 17 and the pipe 14. The addition control portion 21b allows the quantity of the urea water injection from the adding valve 17 during the cooling injection control to be larger when the temperature of the exhaust gas in the exhaust passage 8 in the event of the stop command for the internal combustion engine 1 is high than when the temperature is low.

Accordingly, even in a situation in which the temperature of the exhaust gas in the exhaust passage 8 is high when the stop command for the internal combustion engine 1 is made and the temperature of the adding valve 17 is likely to be high after the stop command for the engine 1 is made, the adding valve 17 and the place around the adding valve 17 are cooled by the urea water injected from the adding valve 17 through the cooling injection control and the overheating of the adding valve 17 can be suppressed.

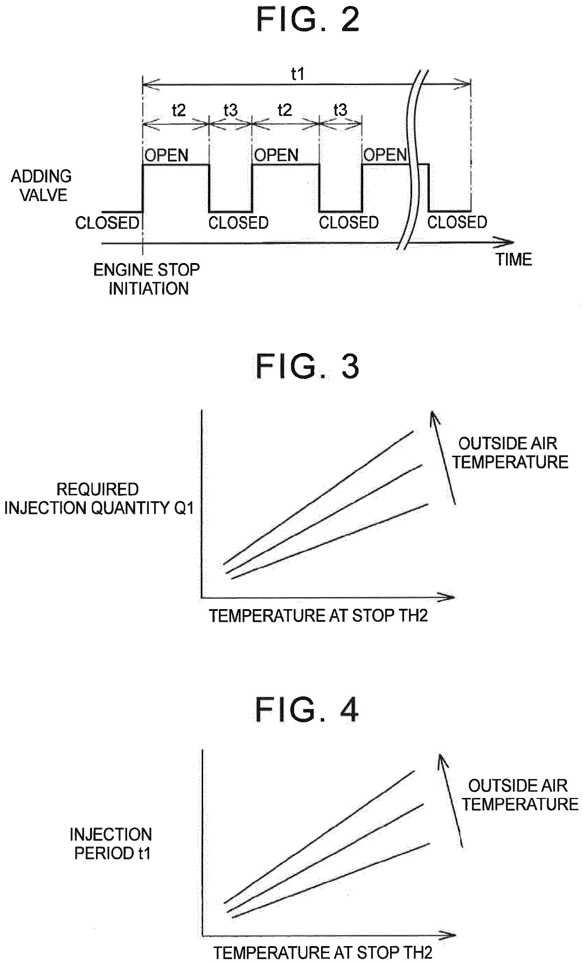

FIG. 2 is a time chart for showing how the urea water is injected from the adding valve 17 during the cooling injection control. When the urea water injection quantity that is required for the cooling of the adding valve 17 during the cooling injection control executed through the addition control portion 21b is regarded as a required injection quantity Q1, the required injection quantity Q1 is obtained based on the temperature of the exhaust gas in the exhaust passage 8 in the event of the stop command for the internal combustion engine 1.

When obtaining the required injection quantity Q1, the addition control portion 21b acquires an exhaust gas temperature TH1 in the exhaust passage 8 in the event of the stop command for the internal combustion engine 1 by using the exhaust gas temperature sensor 28. Then, the addition control portion 21b obtains the temperature of the adding valve 17 (hereinafter, referred to as a temperature at stop TH2) based on the temperature TH1, and obtains the required injection quantity Q1 based on the temperature at stop TH2. In addition, the addition control portion 21b calculates an injection period t1 as a period for injection of the urea water equivalent to the required injection quantity Q1 based on the obtained required injection quantity Q1. The injection period t1 that is calculated in this manner is lengthened as the required injection quantity Q1 is increased. The addition control portion 21b performs intermittent urea water injection from the adding valve 17 so that the urea water equivalent to the required injection quantity Q1 is injected during the injection period t1 subsequent to the stop command for the internal combustion engine 1.

Specifically, opening of the adding valve 17 equivalent to a valve opening time t2 and closing of the adding valve 17 equivalent to a valve closing time t3 are alternately repeated in the injection period t1 so that the intermittent urea water injection from the adding valve 17 is realized. The valve closing time t3 is fixed to an optimum value that allows the urea water injection to be stopped without an error during the intermittent urea water injection from the adding valve 17. The valve opening time t2 is set based on the required injection quantity Q1. The valve opening time t2 that is set as described above is lengthened as the required injection quantity Q1 is increased. The urea water equivalent to the required injection quantity Q1 is injected during the injection period t1 by the intermittent urea water injection from the adding valve 17 being performed as described above. The injection period t1 is lengthened as the required injection quantity Q1 increases so that the urea water equivalent to the required injection quantity Q1 can be injected by the intermittent urea water injection from the adding valve 17. A timing at which the injection period t1 starts is a timing subsequent to the making of the stop command for the internal combustion engine 1. It is conceivable that examples of the timing at which the injection period t1 starts include a timing immediately following the making of the stop command and a timing at which the internal combustion engine 1 stops rotating thereafter.

As illustrated in FIG. 3, the required injection quantity Q1 is obtained based on the temperature at stop TH2 of the adding valve 17 to be a value (increase-side value) increasing in response to an increase in the temperature at stop TH2. As the required injection quantity Q1 is obtained as described above, the quantity of the urea water injection from the adding valve 17 during the cooling injection control is larger when the temperature at stop TH2 of the adding valve 17 (corresponding to the exhaust gas temperature TH1 described above) is high than when the temperature is low.

Not only the temperature at stop TH2 of the adding valve 17 but also the outside air temperature that is detected by the outside air temperature sensor 23 is used when the required injection quantity Q1 is obtained. In other words, the required injection quantity Q1 is obtained based on the temperature at stop TH2 and the outside air temperature, and is obtained to be a value (increase-side value) increasing in response to an increase in the outside air temperature. As the required injection quantity Q1 is obtained as described above, the quantity of the urea water injection from the adding valve 17 during the cooling injection control is larger when the outside air temperature is high than when the temperature is low.

As illustrated in FIG. 4, the injection period t1, which is based on the required injection quantity Q1, is lengthened as the temperature at stop TH2 of the adding valve 17 increases and is lengthened as the outside air temperature increases in a relationship which is obtained such that the injection period t1 is lengthened as the required injection quantity Q1 increases.

After the rotation of the internal combustion engine 1 is stopped and the urea water injection by the cooling injection control is terminated, the urea water in the adding valve 17 and the pipe 14 is recovered to the tank 15. It is preferable that the injection period t1 is obtained to be an extremely short time because the recovery of the urea water is desired to be performed early after the internal combustion engine 1 stops rotating.

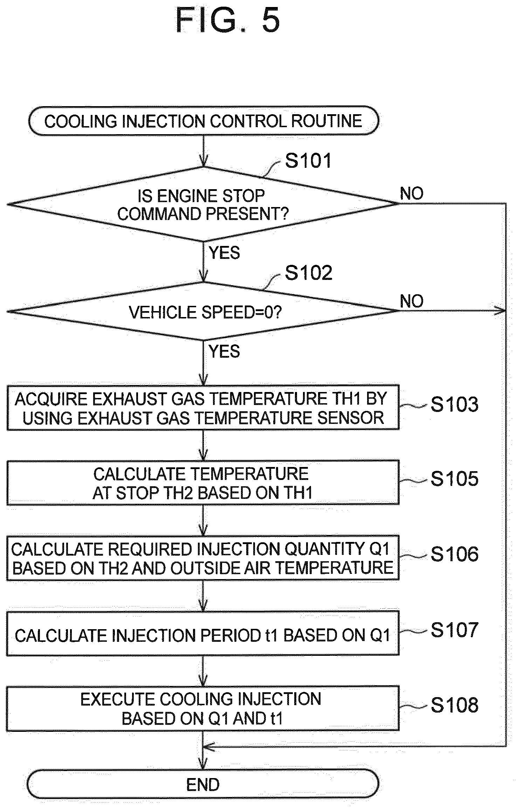

An operation of the additive supply device will be described below. FIG. 5 is a flowchart illustrating a cooling injection control routine for performing the urea water injection for the purpose of cooling the adding valve 17 after the stop command for the internal combustion engine 1 is made. This cooling injection control routine is periodically executed through the electronic control unit 21 (addition control portion 21b) on, for example, a predetermined time interrupt basis.

The addition control portion 21b determines the presence or absence (transmission or non-transmission) of the stop command for the internal combustion engine 1 as the processing of Step 101 (S101) of this routine. In addition, the addition control portion 21b determines whether or not the vehicle speed is "0" (whether or not the vehicle is stationary) as the processing of S102. In the case of a negative determination in one of S101 and S102, the addition control portion 21b temporarily terminates the cooling injection control routine. The addition control portion 21b proceeds to S103 in the case of positive determinations in both S101 and S102.

The addition control portion 21b acquires the exhaust gas temperature TH1 by using the exhaust gas temperature sensor 28 as the processing of S103. Then, the addition control portion 21b proceeds to S105. This temperature TH1 corresponds to the temperature of the exhaust gas at a part on the downstream side of the filter 10 and the upstream side of the adding valve 17 in the exhaust passage 8.

The addition control portion 21b calculates the temperature at stop TH2 of the adding valve 17 based on the exhaust gas temperature TH1 as the processing of S105. The addition control portion 21b proceeds to S106 and S107 thereafter. The addition control portion 21b calculates the required injection quantity Q1 based on the temperature at stop TH2 and the outside air temperature as the processing of S106, and calculates the injection period t1 based on the required injection quantity Q1 as the processing of S107. Then, the addition control portion 21 b proceeds to S 108.

The addition control portion 21 b executes, as the processing of S108, the urea water injection from the adding valve 17 by the cooling injection control, which has the purpose of cooling the adding valve 17, based on the required injection quantity Q1 and the injection period t1. Specifically, the addition control portion 21b alternately repeats the opening of the adding valve 17 equivalent to the valve opening time t2 and the closing of the adding valve 17 equivalent to the valve closing time t3 in the injection period t1 as described above so that the urea water equivalent to the required injection quantity Q1 is injected from the adding valve 17 during the injection period t1. The urea water equivalent to the required injection quantity Q1 is injected during the injection period t1 by the intermittent urea water injection from the adding valve 17 being performed as described above.

After executing the processing of S108, the addition control portion 21b temporarily terminates the cooling injection control routine. This embodiment described in detail above can achieve the following effects.
(1) In the case of the engine operation raising the temperature of the exhaust gas before the operation of the internal combustion engine 1 is stopped, the values of the temperatures of the adding valve 17 exposed to the exhaust gas and the place around the adding valve 17 are increased by the residual heat even after the engine 1 is commanded to stop, and thus the adding valve 17 might be overheated after the engine 1 is commanded to stop. The cooling injection control for the urea water injection from the adding valve 17 is executed after the internal combustion engine 1 is commanded to stop so that the overheating of the adding valve 17 is suppressed. In this cooling injection control, the quantity of the urea water injection from the adding valve 17 during this control is larger when the temperature of the exhaust gas (temperature TH1) in the exhaust passage 8 in the event of the stop command for the internal combustion engine 1 is high than when the temperature is low. Accordingly, even in the situation in which the temperature of the exhaust gas in the exhaust passage 8 is high when the stop command for the internal combustion engine 1 is made and the temperature of the adding valve 17 is likely to be high after the stop command for the engine 1 is made, the adding valve 17 and the place around the adding valve 17 are cooled by the urea water injected from the adding valve 17 through the cooling injection control and the overheating of the adding valve 17 can be suppressed.
(2) In the cooling injection control, the quantity of the urea water injection from the adding valve 17 during this control increases as the temperature of the exhaust gas (temperature TH1) in the exhaust passage 8 in the event of the stop command for the internal combustion engine 1 increases. Accordingly, the quantity of the urea water injection from the adding valve 17 during the cooling injection control is larger when the temperature of the exhaust gas in the exhaust passage 8 in the event of the stop command for the internal combustion engine 1 is high than when the temperature is low. In this case, the quantity of the urea water injection from the adding valve 17 during the cooling injection control increases as the temperature of the exhaust gas (temperature TH1) in the exhaust passage 8 in the event of the stop command for the internal combustion engine 1 increases, that is, as the temperature of the adding valve 17 is likely to increase after the stop command for the engine 1 is made. Accordingly, the adding valve 17 and the place around the adding valve 17 can be cooled, without excess or deficiency, by the urea water after the stop command for the internal combustion engine 1 is made.
(3) The quantity of the urea water injection from the adding valve 17 during the cooling injection control is variable depending on the outside air temperature as well as the temperature of the exhaust gas (temperature TH1) in the exhaust passage 8 in the event of the stop command for the internal combustion engine 1. In other words, the quantity of the urea water injection from the adding valve 17 during the cooling injection control is larger when the outside air temperature is high than when the temperature is low. Accordingly, even in a situation in which the outside air temperature is high and a cooling effect for the adding valve 17 and the place around the adding valve 17 resulting from the urea water added from the adding valve 17 during the cooling injection control is unlikely to be obtained, the adding valve 17 and the place around the adding valve 17 can be effectively cooled by the urea water after the stop command for the internal combustion engine 1 is made.
(4) In the cooling injection control, the quantity of the urea water injection from the adding valve 17 during this control increases as the outside air temperature increases. Accordingly, the quantity of the urea water injection from the adding valve 17 during the cooling injection control is larger when the outside air temperature is high than when the temperature is low. In this case, the quantity of the urea water injection from the adding valve 17 during the cooling injection control increases as the outside air temperature increases, and thus the adding valve 17 and the place around the adding valve 17 can be cooled, without excess or deficiency and in accordance with the outside air temperature, by the urea water after the stop command for the internal combustion engine 1 is made.
(5) The urea water addition from the adding valve 17 based on the cooling injection control is executed on the condition that the internal combustion engine is commanded to stop and the vehicle in which the internal combustion engine 1 is mounted is stationary (at a vehicle speed of "0"). When the vehicle is stationary (with the vehicle speed at "0"), the cooling of the adding valve 17 by the traveling wind is not performed, and thus the adding valve 17 is likely to be overheated. However, the overheating of the adding valve 17 in this situation can be suppressed by the execution of the cooling injection control.

The above-described embodiment can be modified as follows. •In the processing of S102 of the cooling injection control routine, a vehicle speed of "0" (vehicle being stationary) is used as the condition for the execution of the urea water addition from the adding valve 17 by the cooling injection control. However, this "0" vehicle speed condition is optional, and this condition may be substituted with another condition such as the vehicle speed being lower than a threshold which exceeds "0". In a state where the vehicle has a low traveling speed below the threshold, the cooling of the adding valve 17 by the traveling wind becomes difficult and the adding valve 17 is likely to be overheated. However, the overheating of the adding valve 17 in this situation can be suppressed.
·In the embodiment described above, the quantity of the urea water injection from the adding valve 17 during the cooling injection control increases in stages as a result of an increase in the outside air temperature. However, the quantity of the urea water injection from the adding valve 17 during the cooling injection control may continuously increase instead as a result of an increase in the outside air temperature. The quantity of the urea water injection from the adding valve 17 may be allowed to increase as a result of an increase in the outside air temperature by, for example, a correction factor corresponding to the outside air temperature being integrated with a calculation formula for the required injection quantity Q1.
·The quantity of the urea water injection from the adding valve 17 during the cooling injection control does not necessarily have to be variable in accordance with the outside air temperature. -In the cooling injection control, the quantity of the urea water injection from the adding valve 17 during this control may be increased in stages in accordance with an increase in the temperature of the exhaust gas (temperature TH1) in the exhaust passage 8 in the event of the initiation of the stopping of the internal combustion engine 1.
·In the cooling injection control, the injection period t1 during this control may be lengthened in stages in accordance with an increase in the outside air temperature. •In the cooling injection control, the injection period t1 during this control may be lengthened in stages in accordance with an increase in the temperature of the exhaust gas (temperature TH1) in the exhaust passage 8 in the event of the initiation of the stopping of the internal combustion engine 1.
·The temperature at stop TH2 of the adding valve 17 may be obtained based on a temperature of the first NOx purification catalyst 11 or the second NOx purification catalyst 12. The temperature of the first NOx purification catalyst 11 and the temperature of the second NOx purification catalyst 12 can be obtained based on the exhaust gas temperature that is detected by the exhaust gas temperature sensor 28, a flow rate of the air that is supplied to the internal combustion engine 1, the amount of fuel consumption of the engine 1, and the like.
·In the above description, a situation in which the OFF operation of the ignition switch 36 is performed by the driver of the vehicle is used as an example of a situation in which the stop command for the internal combustion engine 1 is made. However, in the case of an internal combustion engine performing automatic stop and automatic restart in accordance with traveling situations of the vehicle and the like, examples of the situation can also include a situation in which an automatic stop condition regarding the engine is satisfied.
·The recovery of the urea water in the adding valve 17 and the pipe 14 to the tank 15 subsequent to the initiation of the stopping of the internal combustion engine 1 is optional. -A reducing agent solution other than the urea water may also be used as the additive.

## Claims

1. An additive supply device comprising:
an adding valve (17) configured to inject an additive into an exhaust passage (8) of an internal combustion engine (1); and
an electronic control unit (21) configured to control the injection of the additive from the adding valve (17), the electronic control unit (21) being configured to execute a cooling injection control for injecting the additive from the adding valve (17) after the internal combustion engine (1) is commanded to stop such that a quantity (Q1) of the injection of the additive during the cooling injection control is larger when a temperature of exhaust gas in the exhaust passage (8) in an event of the stop command for the internal combustion engine is higher than a predetermined temperature than when the temperature is lower than the predetermined temperature, **characterised by** the electronic control unit (21) being further configured to execute the cooling injection control when the stop command for the internal combustion engine (1) is made and a traveling speed of a vehicle in which the internal combustion engine (1) is mounted is lower than a threshold exceeding "0".

2. The additive supply device according to claim 1,
wherein the electronic control unit (21) is configured to execute the cooling injection control such that the quantity (Q1) of the injection of the additive during the cooling injection control increases as the temperature of the exhaust gas in the exhaust passage (8) in the event of the stop command for the internal combustion engine (1) increases.

3. The additive supply device according to claim 1 or 2,
wherein the electronic control unit (21) is configured to execute the cooling injection control such that the quantity (Q1) of the injection of the additive during the cooling injection control is larger when an outside air temperature is high than when the outside air temperature is low.

4. The additive supply device according to claim 3,
wherein the electronic control unit (21) is configured to execute the cooling injection control such that the quantity (Q1) of the injection of the additive during the cooling injection control increases as the outside air temperature increases.

5. The additive supply device according to any one of claims 1 to 4,
wherein the electronic control unit (21) includes an engine control portion (21a) and an addition control portion (21b), the engine control portion (21a) being configured to transmit a making of the stop command to the addition control portion (21b) in a case where the internal combustion engine (1) is commanded to stop.

## Patentansprüche

1. Additivzuführvorrichtung, aufweisend:
ein Beigabeventil (17), das so konfiguriert ist, dass es ein Additiv in eine Abgasleitung (8) einer Verbrennungskraftmaschine (1) einspritzt; und
eine elektronische Steuereinheit (21), die so konfiguriert ist, dass sie die Einspritzung des Additivs von dem Beigabeventil (17) steuert, wobei die elektronische Steuereinheit (21) so konfiguriert ist, dass sie eine Kühleinspritzungssteuerung zum Einspritzen des Additivs von dem Beigabeventil (17) durchführt, nachdem die Verbrennungskraftmaschine (1) angewiesen wurde, zu stoppen, so dass eine Menge (Q1) der Einspritzung des Additivs während der Kühleinspritzungssteuerung größer ist, wenn eine Temperatur des Abgases in der Abgasleitung (8) in einem Fall, dass eine Stoppanweisung für die Verbrennungskraftmaschine vorliegt, höher ist als eine vorgegebene Temperatur, als in einem Fall, dass die Temperatur niedriger ist als die vorgegebene Temperatur, **dadurch gekennzeichnet, dass** die elektronische Steuereinheit (21) ferner so konfiguriert ist, dass sie die Kühleinspritzungssteuerung durchführt, wenn die Stoppanweisung für die Verbrennungskraftmaschine (1) erfolgt und eine Fahrtgeschwindigkeit eines Fahrzeugs, in dem die Verbrennungskraftmaschine (1) eingebaut ist, geringer ist als ein Schwellenwert, der größer ist als "0".

2. Additiv-Zuführvorrichtung nach Anspruch 1,
wobei die elektronische Steuereinheit (21) so konfiguriert ist, dass sie die Kühleinspritzungssteuerung so durchführt, dass die Menge (Q1) der Einspritzung des Additivs während der Kühleinspritzungssteuerung in dem Maße zunimmt, in dem die Temperatur des Abgases in der Abgasleitung (8) in dem Fall zunimmt, in dem eine Stoppanweisung für die Verbrennungskraftmaschine (1) vorliegt.

3. Additiv-Zuführvorrichtung nach Anspruch 1 oder 2,
wobei die elektronische Steuereinheit (21) so konfiguriert ist, dass sie die Kühleinspritzungssteuerung so durchführt, dass die Menge (Q1) der Einspritzung des Additivs während der Kühleinspritzungssteuerung in einem Fall mit hoher Außenlufttemperatur größer ist als in einem Fall mit niedriger Außenlufttemperatur.

4. Additiv-Zuführvorrichtung nach Anspruch 3,
wobei die elektronische Steuereinheit (21) so konfiguriert ist, dass sie die Kühleinspritzungssteuerung so durchführt, dass die Menge (Q1) der Einspritzung des Additivs während der Kühleinspritzungssteuerung in dem Maße zunimmt, wie die Außenlufttemperatur zunimmt.

5. Additiv-Zuführvorrichtung nach einem der Ansprüche 1 bis 4,
wobei die elektronische Steuereinheit (21) einen Maschinen-Steuerabschnitt (21a) und einen Beigabe-Steuerabschnitt (21b) beinhaltet, wobei der Maschinen-Steuerabschnitt (21a) so konfiguriert ist, dass er in einem Fall, in dem die Verbrennungskraftmaschine (1) angewiesen wird, zu stoppen, ein Erfolgen der Stoppanweisung an den Beigabe-Steuerabschnitt (21b) überträgt.

## Revendications

1. Dispositif d'alimentation en additif comprenant :
une soupape d'ajout (17) configurée, pour injecter un additif dans un passage d'échappement (8) d'un moteur à combustion interne (1) ; et
une unité de commande électronique (21) configurée pour commander l'injection de l'additif à partir de la soupape d'ajout (17), l'unité de commande électronique (21) étant configurée pour exécuter une commande d'injection de refroidissement pour injecter l'additif à partir de la soupape d'ajout (17) après que le moteur à combustion interne (1) a reçu l'ordre de s'arrêter de sorte qu'une quantité (Q1) de l'injection de l'additif pendant la commande d'injection de refroidissement est plus importante lorsqu'une température du gaz d'échappement dans le passage d'échappement (8) dans le cas d'une commande d'arrêt pour le moteur à combustion interne, est supérieure à une température prédéterminée, qu'au moment où la température est inférieure à la température prédéterminée,
**caractérisé par** l'unité de commande électronique (21) qui est en outre configurée pour exécuter la commande d'injection de refroidissement lorsque la commande d'arrêt pour le moteur à combustion interne (1) est réalisée et qu'une vitesse de déplacement d'un véhicule dans lequel le moteur à combustion interne (1) est monté, est inférieure à un seuil dépassant « 0 ».

2. Dispositif d'alimentation en additif selon la revendication 1,
dans lequel l'unité de commande électronique (21) est configurée pour exécuter la commande d'injection de refroidissement de sorte que la quantité (Q1) de l'injection de l'additif pendant la commande d'injection de refroidissement augmente au fur et à mesure que la température du gaz d'échappement dans le passage d'échappement (8) dans le cas de la commande d'arrêt pour le moteur à combustion interne (1) augmente.

3. Dispositif d'alimentation en additif selon la revendication 1 ou 2,
dans lequel l'unité de commande électronique (21) est configurée pour exécuter la commande d'injection de refroidissement de sorte que la quantité (Q1) de l'injection d'additif pendant la commande d'injection de refroidissement est supérieure lorsqu'une température d'air extérieur est supérieure au moment où la température d'air extérieur est inférieure.

4. Dispositif d'alimentation en additif selon la revendication 3,
dans lequel l'unité de commande électronique (21) est configurée pour exécuter la commande d'injection de refroidissement de sorte que la quantité (Q1) de l'injection de l'additif pendant la commande d'injection de refroidissement augmente lorsque la température d'air extérieur augmente.

5. Dispositif d'alimentation en additif selon l'une quelconque des revendications 1 à 4,
dans lequel l'unité de commande électronique (21) comprend une partie de commande de moteur (21a) et une partie de commande d'ajout (21b), la partie de commande de moteur (21a) étant configurée pour transmettre une réalisation de la commande d'arrêt à la partie de commande d'ajout (21b) dans le cas dans lequel le moteur à combustion interne (1) reçoit l'ordre de s'arrêter.
